# EUROPEAN PATENT APPLICATION

(11) **EP 1 772 083 A1**
(43) Date of publication of application: **11.04.2007**
(21) Application number: 04789902.6
(22) Date of filing: 29.10.2004
(51) Int. Cl.: A47J 37/04

(54) **MULTIFUNCTION ROASTING OVEN**

(30) Priority: 29.07.2004 CN 200420074013
(71) Applicant: Guangzhou Light Holdings Limited, Guangzhou, Guangdong 510120 (CN)
(72) Inventor: LI, Jian, Guangdong 510120 (CN)
(74) Representative: Coppo, Alessandro
(86) International application number: PCT/CN2004/001243
(87) International publication number: WO 2006/010299

(57) **Abstract**

A multifunctional roasting oven comprises a housing with a door that can be opened and closed, and a roasting chamber provided inside the housing, with a heater provided at the lower portion of roasting chamber, and a plurality of horizontal roasting tubes provided at the upper portion of the roasting chamber, the food products can be placed over the roasting tubes. The roasting tubes driven by a drive device may be rotated with the axes, respectively. The advantage is to resolve the problem of single-acting and discommondiousness use.

## Description

### Field of the Invention

The present invention relates to a multifunctional roasting oven. More particularly, the present invention relates to a household roasting device.

### Background of the invention

With increasing of the living intensity of people, devices for roasting foods conveniently and quickly are becoming more favored. Currently, there are various roasting devices for roasting foods. However, the roasting ways of these devices are fixed, their applications are limited and they can not be conveniently used. For example, some roasting devices can only roast foods which need not to be turned over, and other roasting devices can only roast foods which must be continuously turned over. Therefore, if there is a need for making a composite food, it needs to be roasted in different roasting devices respectively. For example, when hot dogs are made, normally, the bread is roasted and sausages are heated in different roasting devices respectively, and then the hot dogs are formed by combining the bread with the sausages. This process is complex, takes a long time, and can not be processed in a single roasting device.

### Summary of the Invention

An object of the present invention is to provide a multifunctional roasting oven which is capable of realizing a plurality of roasting ways and which can roast not only the foods which need not to be turned over and but also the foods which must be continuously turned over so as to heat them uniformly. Consequently, kinds of foods can be roasted at one time and composite foods can be conveniently made.

In order to realize the object described above, the present invention provides a multifunctional roasting oven which comprises a housing having a door that can be opened and closed, a roasting chamber formed in the housing, a heater provided above a bottom plate inside the roasting chamber, a power supply switch for causing the heater to generate heat in such a manner that some foods placed above the heater can be heated when the power supply switch is closed to switch on an electric circuit, wherein a plurality of horizontal roasting tubes, on which foods to be roasted can be placed, are provided above the bottom plate inside the roasting chamber and can be driven by a drive device to rotate around their respective axes, and the roasting tubes generate heat when the power supply switch is closed to switch on the electric circuit.

The roasting oven of the present invention can further comprise following technical features:
The drive device comprises an electric motor supported inside the housing, a driving gear fixed to the output shaft of the electric motor, and driven gears which are driven to rotate by the driving gear through a chain. The shaft of each of the driven gears is fixed and connected to one end of each of the roasting tubes so as to drive the roasting tubes to rotate them around their own axes.

### Brief Description of the Figures

The invention will be explained through the following detailed description of a preferred embodiment with reference to the attached figures, in which
Fig. 1 is a schematic view of an embodiment of a multifunctional roasting oven of the present invention;
Fig. 2 is a front view of the embodiment shown in Fig. 1;
Fig. 3 is a sectional view along line A-A in Fig. 2; and
Fig. 4 is a sectional view along line B-B in Fig. 2.

### Detailed Description of the Preferred Embodiments

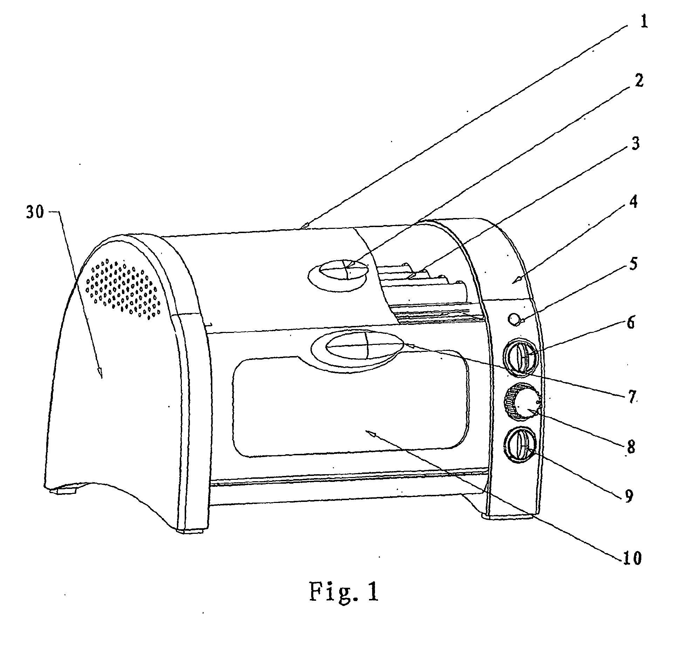

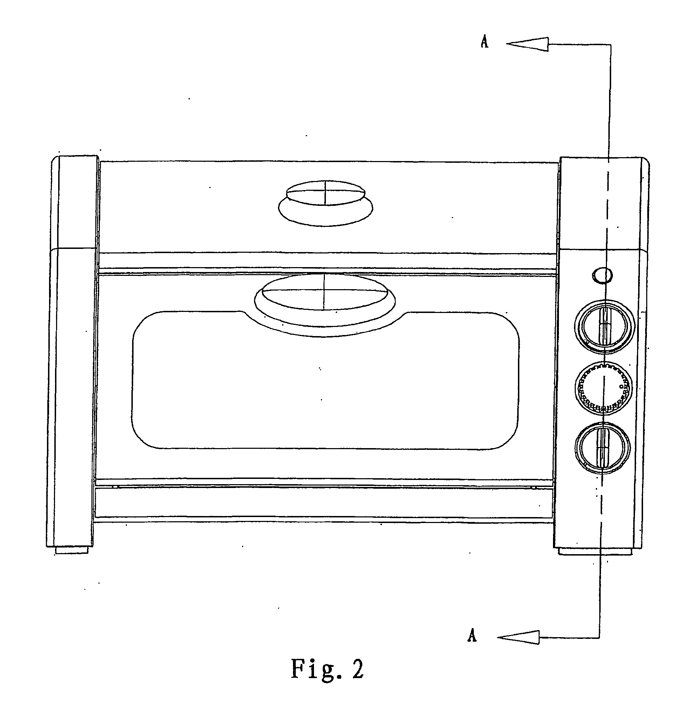

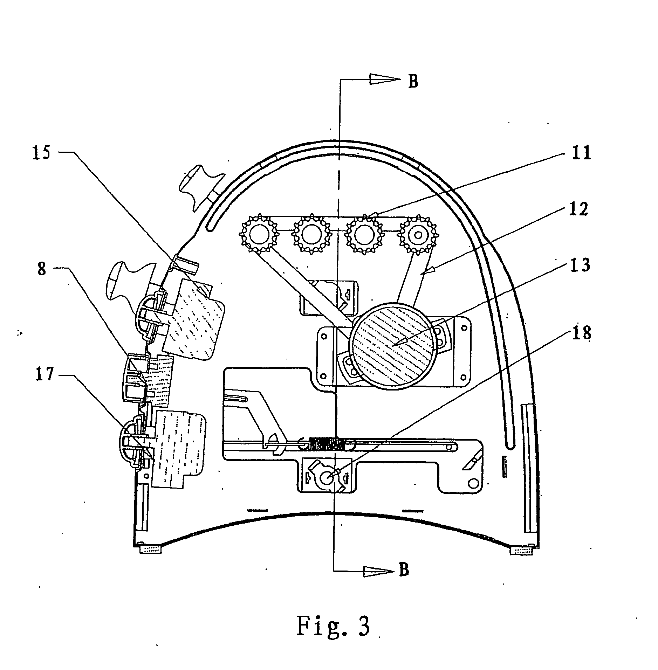

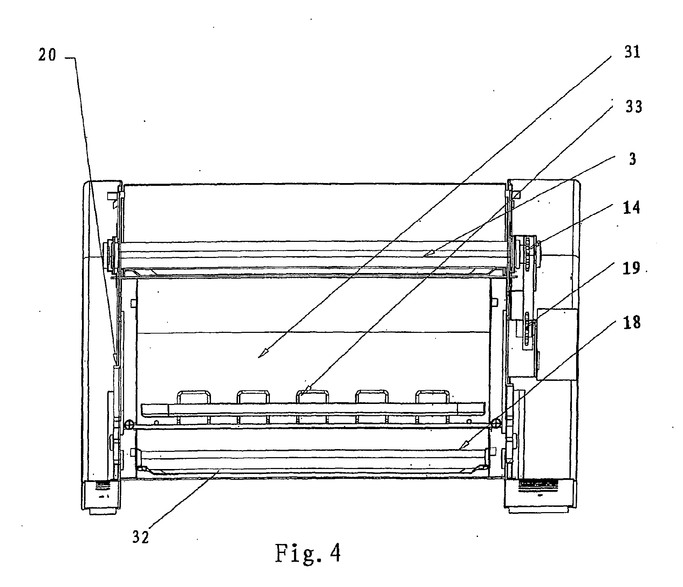

As shown in Figs. 1 to 4, the present invention provides a multifunctional roasting oven which comprises a housing 30 having a door 10 that can be opened and closed, a roasting chamber 31 formed in the housing 30, a heater 18 provided above a bottom plate 32 inside the roasting chamber 31, a power supply switch 8 for causing the heater 18 to generate heat in such a manner that some foods placed above the heater 18 can be heated when the power supply switch 8 is closed to switch on an electric circuit, the heater 18 being substantially used to roast and heat foods which need not to be turned over, the roasting oven of the present invention is characterized in that a plurality of horizontal roasting tubes 3, on which foods to be roasted can be placed, are provided above the bottom plate 32 inside the roasting chamber 31 and can be driven by a drive device to rotate around their respective axes so as to roast and heat the foods which must be continuously turned over, and that the roasting tubes 3 generate heat when the power supply switch 8 is closed to switch on an electric circuit. Since the power supply switch 8 and the electric circuits can be chosen from various kinds of power supply switches and electric circuits of a roasting oven of the prior art, and the drive device for driving the roasting tubes 3 to rotate around their respective axes can be also chosen from various kinds of the drive devices in the prior art, the electric circuits and drive device of the present invention will be not explained here in detail.

In the embodiment shown in the figures, a drive device is as following: the drive device comprises an electric motor 13 supported inside the housing 30, a driving gear 19 fixed to the output shaft of the electric motor 13, and driven gears 11 which are driven to rotate by the driving gear 19 through a chain 12. The shaft of each of the driven gears 11 is fixed and connected to one end of each of the roasting tubes 13 so as to drive the roasting tubes 13 to rotate them around their own axes, in order to uniformly heat foods need to be continuously turned over. Of course, as described above, other kinds of drive devices in the prior art can be also used to rotate the roasting tubes.

In the shown embodiment, heating tubes 14 are mounted inside the roasting tubes 3. When the power supply switch 8 is closed to switch on the electric circuit, the heating tubes 14 generate heat so as to heat the roasting tubes 3, in order to roast foods placed on the roasting tubes 3. Further, the other kinds of roasting tubes 3, which generate heat directly when the power supply switch is closed, can be used instead of heating the roasting tubes 3 by means of the heating tubes 14.

In the present embodiment, a food frame 33 for placing foods to be roasted is provided above the heater 18 above the bottom plate 32 inside the roasting chamber 31.

On the inner walls of the housing 30, there is provided a support 20. The ends of the roasting tubes 3 are supported in the holes of the support 20 so that the roasting tubes 3 can be freely rotated. The support can be fixed and assembled to the housing so as to support and protect the roasting tubes 3 and the roasting oven. The heater 18 can be mounted at the bottom of the support 20 and can heat foods which need not to be turned over when the heater 18 works.

The roasting tubes 3 can be hollow tubes made of aluminum, iron or stainless steel.

In order to control the roasting effects on various foods, two or more controllers can be used to control roasting temperature and time of the roasting tubes 3 and the heater 18, depending on the various foods to be roasted. For example, the multifunctional roasting oven can comprise two timers 15 and 17 which control the time of heating foods of the roasting tubes 3 and the heater 18, respectively.

The housing 3 0 of the present invention can be in various structure forms. In the present embodiment, a slot is provided on the left and right end walls of the housing 30 for mounting the support 20, respectively. The support 20 can be a "1-1" shaped support. '

There is an upper cover 1 on the top of the housing 3 0. The upper cover 1 can be opened and closed freely and is provided with a handle 2. The upper cover 1 is mounted to the support 20 and can be opened and closed freely through the handle 2. The front of the housing 30 is provided with a door 10 which can be also mounted to the support 20 and opened and closed freely through a handle 7.

In addition, in order to hold and place various foods, the roasting tubes and the roasting chamber can be formed in different shapes.

In fact, all of the housing, the roasting chamber, the roasting tubes and the drive device of the multifunctional roasting oven of the present invention can use the means known in the prior art.

Thus, the multifunctional roasting oven of the present invention actually is virtually a roasting device in which some functions are incorporated into a product. Various foods can be roasted in the multifunctional roasting oven of the present invention at the same time. The device combines some roasting functions into a single roasting device, and thus solves the problem that applications of the conventional products are limited and they can not be conveniently used.

## Claims

1. A multifunctional roasting oven, comprising: a housing (30) having a door (10) that can be opened and closed, a roasting chamber (31) formed in the housing (30), a heater (18) provided above a bottom plate (32) inside said roasting chamber (31), a power supply switch (8) for causing the heater (18) to generate heat in such a manner that some foods placed above the heater (18) can be heated when the power supply switch (8) is closed to switch on an electric circuit, **characterized in that** a plurality of horizontal roasting tubes (3), on which foods to be roasted can be placed, are provided above the bottom plate (32) inside the roasting chamber (31) and can be driven by a drive device to rotate around their respective axes, and that said roasting tubes (3) generate heat when the power supply switch (8) is closed to switch on the electric circuit.

2. The multifunctional roasting oven according to Claim 1, **characterized in that**, heating tubes (14) are mounted inside said roasting tubes (3), and when the power supply switch (8) is closed to switch on the electric circuit, the heating tubes (14) generate heat so as to heat the roasting tubes (3), in order to roast foods placed on the roasting tubes (3).

3. The multifunctional roasting oven according to Claim 1, **characterized in that**, a food frame (33) for placing foods to be roasted is provided above the heater (18) above the bottom plate (32) inside the roasting chamber (31).

4. The multifunctional roasting oven according to Claim 1, **characterized in that**, on the inner walls of the housing (30), there is provided a support (20), the ends of said roasting tubes (3) are supported in the holes of the support (20) so that said roasting tubes (3) can be freely rotated.

5. The multifunctional roasting oven according to any one of Claims 1 to 4, **characterized in that**, said drive device comprises an electric motor (13) supported inside the housing (30), a driving gear (19) fixed to the output shaft of said electric motor (13), and driven gears (11) which are driven to rotate by the driving gear (19) through a chain (12) and the shaft of each of the driven gears (11) is fixed and connected to one end of each of the roasting tubes (13) so as to drive the roasting tubes (13) to rotate them around their own axes.

6. The multifunctional roasting oven according to any one of Claims 1 to 4, **characterized in that**, the roasting tubes (3) are hollow tubes made of aluminum, iron or stainless steel.

7. The multifunctional roasting oven according to any one of Claims 1 to 4, **characterized in that**, two or more controllers are used to control roasting temperature and time of the roasting tubes (3) and the heater (18).

8. The multifunctional roasting oven according to Claim 7, **characterized in that**, further comprising two timers (15) and (17) which control the time for heating foods of said roasting tubes (3) and said heater (18), respectively.

9. The multifunctional roasting oven according to any one of Claims 1 to 4, **characterized in that**, there is an upper cover (1) on the top of said housing (30), the upper cover (1) can be opened and closed freely and is provided with a handle (2).
